# EUROPEAN PATENT SPECIFICATION

(11) **EP 4 116 502 B1**
(45) Date of publication and mention of the grant of the patent: **27.08.2025**
(21) Application number: 20926156.9
(22) Date of filing: 04.09.2020
(51) Int. Cl.: E02F 3/96, F16F 15/02, G10K 11/16, F16J 15/3232, F16J 15/324

(54) **VACUUM BREAKER**
VAKUUMSCHALTER
MARTEAU HYDRAULIQUE À VIDE

(30) Priority: 17.03.2020 KR 20200032805; 10.04.2020 KR 20200044228
(43) Date of publication of application: 11.01.2023
(73) Proprietor: Daedong Engineering Co. Ltd., Paju-si, Gyeonggi-do 10846 (KR)
(72) Inventor: PARK, Jeong Yel, Gyeonggi-do 10413 (KR)
(74) Representative: Stolmár & Partner Patentanwälte PartG mbB
(86) International application number: PCT/KR2020/011966
(87) International publication number: WO 2021/187691

(56) References cited:
- JP-A- H05 293 773
- JP-A- H11 188 662
- KR-A- 20090 051 629
- KR-A- 20110 139 967
- KR-A- 20130 053 134
- KR-A- 20150 119 566
- KR-A- 20200 045 991
- KR-A- 20200 045 991
- KR-A- 20200 047 460
- KR-B1- 101 197 158
- KR-B1- 101 219 299
- KR-B1- 101 285 288
- KR-B1- 101 775 328
- KR-B1- 101 896 100
- KR-B1- 102 009 413
- KR-Y1- 200 406 494
- US-A1- 2018 305 892

## Description

### [Technical Field]

The present invention relates to a breaker, and more specifically, to a vacuum breaker which forms a vacuum atmosphere around a noise generation portion to reduce noise and increases striking power.

### [Background Art]

Generally, hydraulic breakers are installed and used in construction equipment such as excavators and strike chisels which are breaking tools using pistons of cylinders to break concrete, rock, and the like using striking power.

Meanwhile, due to stricter noise regulations at construction sites, construction equipment noise levels are also required to be displayed, and excavators, drawers, loaders, breakers, and the like are included as types of equipment required to display noise levels.

In addition, in order to conduct construction with a high degree of noise within a predetermined distance from a residential area, apartment houses, schools, hospitals, public libraries, and the like, soundproofing facilities should be installed before the construction begins.

In order to avoid such noise regulations, low noise level types of equipment are being developed for the breakers which are included as targets required to display noise levels according to the regulations.

Korean Patent No. 2009413 discloses a low-noise breaker, and Korean Patent No. 1230361 discloses a vacuum breaker including a guide for noise reduction.

In addition, Korean Patent No. 1775328 discloses a breaker including a striking space having a vacuum atmosphere. Document US 2018/305892 A1 discloses a reciprocating impact hammer with a vacuum chamber.

The disclosed breaker includes a cylinder in which a piston is provided to be reciprocally moved by a separate driving pump, a housing which is provided under the cylinder and is vertically hollow and in which a striking space is formed, a striking unit which is provided in the housing, seals the striking space at a lower portion of the striking space, and receives striking of the piston and of which a lower end portion strikes a striking target, and a vacuum unit which communicates with the striking space and adjusts an inner portion of the striking space to have a vacuum atmosphere so as to reduce noise during striking of the piston.

The vacuum breaker has a structure which adjusts the vacuum atmosphere in the striking space to reduce the noise, but, since the vacuum breaker is formed in a cylindrical shape, it is difficult to expect a noise reduction effect.

Particularly, since a chamber portion of the piston operated by a hydraulic pressure is exposed to the vacuum atmosphere, there is a problem that lubricant leaks into the striking space. In addition, the striking space is a space for reducing noise and does not significantly affect an increase in the striking power of the piston.

Meanwhile, Korean Patent No. 1219299 discloses a pile driver, and Korean Patent Publication No. 2009-051629 discloses a pile driver including an active noise control device.

In addition, Korean Patent Laid-Open No. 2011-0139967 discloses a vacuum breaker including a rod guide for noise reduction, and Korean Patent No. 10-1285288 discloses a hydraulic breaker with a low-noise vibration structure.

Although the disclosed vacuum breaker may reduce noise due to striking, but may not reduce the noise transmitted through a chisel, the noise due to a repulsive force when the chisel breaks rock, and the vibrations and noise generated by striking power transmitted to a main body of the breaker during striking of the piston and the chisel.

In addition, Korean Patent No. 1197158 discloses a low-noise hydraulic breaker. The disclosed hydraulic breaker includes a hydraulic cylinder, a piston installed in the hydraulic cylinder, a front head coupled to a lower portion of the hydraulic cylinder, a chisel which is installed in the front head and of which a lower end protrudes outward from the front head and is struck by the piston, a striking chamber which is formed in an upper end portion of the front head and in which a lower end of the piston and an upper end of the chisel are positioned, a moving path formed in the front head and connected to the striking chamber, a leak noise shielding unit which is positioned at a lower end of the front head and in which a dust/soundproof room is formed, and an actuator installed around the leak noise shielding unit.

Korean Patent No. 1896100 discloses a low-noise perforator.

### [Disclosure]

### [Technical Problem]

The present invention is directed to providing a vacuum breaker capable of reducing noise generated due to striking power of a chisel due to a piston and a noise transmitted through the chisel and a breaker unit during striking.

The present invention is also directed to providing a vacuum breaker capable of operating while a chisel enters or exits a breaker housing so that vibrations and noise generated due to vibrations and a repulsive force of the chisel are reduced.

The present invention is also directed to providing a vacuum breaker capable of preventing overheating of a piston and a chisel by supplying external air for cooling to a vacuum chamber surrounded by a breaker housing and a striking chamber in which the chisel and the piston are struck.

### [Technical Solution]

One aspect of the present invention provides a breaker unit including a cylinder part having a piston which is reciprocally moved and a front head which slidably supports a chisel for breaking and includes a striking chamber for striking the chisel using the piston of the cylinder part, a breaker housing forming a vacuum chamber which surrounds the breaker unit to block noise, a vacuum generation unit which is installed on the breaker housing and maintains a vacuum state of the vacuum chamber, and a cooling unit which supplies external air to the striking chamber of the breaker unit surrounded by the breaker housing to cool a striking portion of the piston and a striking portion of the chisel and discharges the external air which has cooled the striking portions through the vacuum chamber so as to cool the breaker unit.

A supply hole through which the external air is introduced into the breaker housing may be formed in the cooling unit, an inlet hole may be formed in the front head communicating with the striking chamber, a connection pipe connecting the supply hole and the inlet hole may be provided, and a discharge hole may be formed in the front head so that the striking chamber communicates with the vacuum chamber, air for cooling is introduced into the striking chamber through the supply hole and the inlet hole, and a descending speed of a piston is increased by a vacuum pressure applied to the striking chamber.

A reciprocally moving cylinder which moves the breaker unit installed in the vacuum chamber in a forward or rearward direction in the vacuum chamber may be further provided on the breaker housing.

In addition, an oil leak prevention part, which prevents operation oil from leaking into the striking chamber due to a vacuum pressure applied to the striking chamber, may be further provided in the cylinder part.

Piston seals for close contact between a cylinder and an outer surface of the piston and vacuum seals which are installed to be spaced a predetermined distance from the piston seals and maintain a vacuum state may be installed in the oil leak prevention part, an oil groove in which a lubricant is stored may be formed in an inner surface of the cylinder between the vacuum seals and the piston seals, and an oil discharge pipe through which oil in the oil groove is discharged to the outside of the breaker housing or to a storage tank may be installed in the cylinder.

### [Advantageous Effects]

A vacuum breaker according to the present invention can increase an acceleration force of a piston of a cylinder part to increase striking power of a chisel using a vacuum pressure during operation, and since striking portions of the chisel and the piston are continuously cooled by external air, overheating of the chisel and the piston can be prevented.

Particularly, since noise generated when the piston strikes the chisel and noise transmitted to a breaker unit and a breaker housing due to a repulsive force of the chisel when rock is broken can be reduced, the vacuum breaker can be used in a place in which noise generation is regulated.

### [Description of Drawings]

FIG. 1 is a perspective view illustrating a vacuum breaker according to the present invention.
FIG. 2 is a cross-sectional view illustrating the vacuum breaker illustrated in FIG. 1.
FIG. 3 is a partially cut perspective view illustrating another example of the vacuum breaker according to the present invention.
FIG. 4 is a cross-sectional view illustrating the vacuum breaker according to the present invention illustrated in FIG. 3.
FIG. 5 is an enlarged cross-sectional view illustrating a chisel support illustrated in FIG. 4.
FIG. 6 is an enlarged cross-sectional view illustrating main parts of the chisel support.

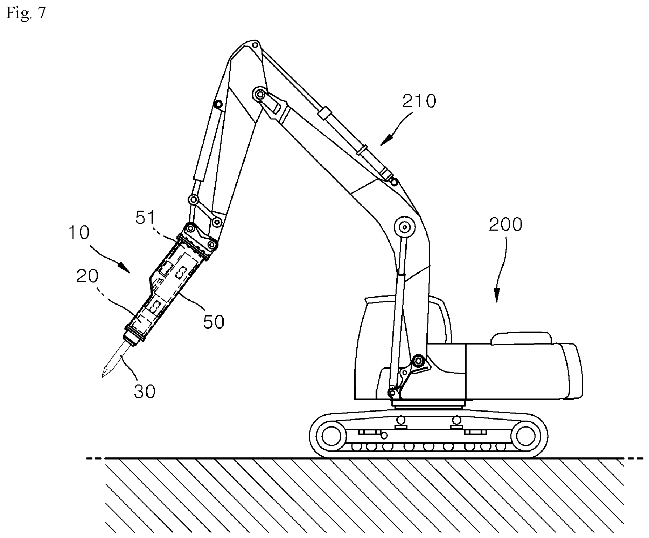

FIGS. 7 to 9 are side views illustrating a state in which the vacuum breaker according to the present invention is installed and used in an excavator.

### [Modes of the Invention]

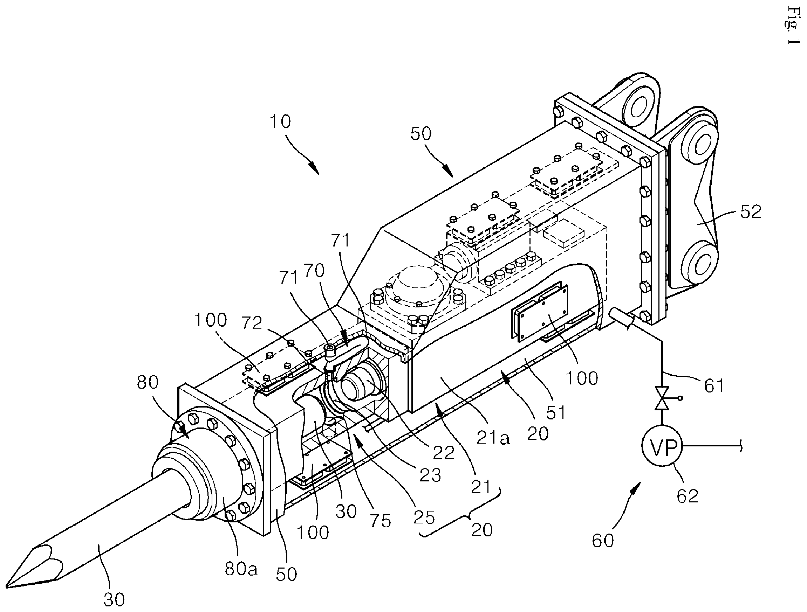

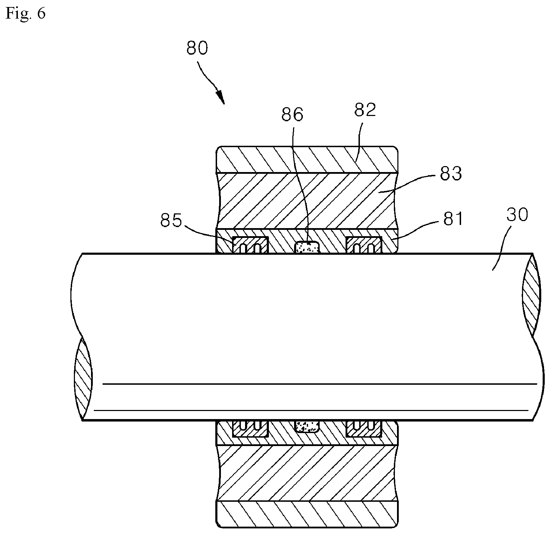

A vacuum breaker according to one embodiment of the present invention capable of reducing noise and improving striking power is illustrated in FIGS. 1 to 6.

Referring to the drawings, a vacuum breaker 10 according to the present invention includes a breaker unit 20 including a chisel 30 for breaking and excavating rock and a cylinder part 21 for striking the chisel 30 and a breaker housing 50 including a bracket part 52 coupled to a boom of an excavator and surrounding the breaker unit 20 to form a vacuum space 51 in which a vacuum state at a predetermined pressure is maintained.

Vibration reduction members 100, which prevent vibrations generated during operation of the breaker unit 20 from being transmitted to the breaker housing 50 and resonance from being generated, are installed between an outer surface of the breaker unit 20 and an inner surface of the breaker housing 50 and support the breaker unit 20 with respect to the breaker housing 50.

In addition, the vacuum breaker 10 includes a vacuum generation unit 60 for maintaining a vacuum atmosphere of a vacuum chamber 51 and a vacuum atmosphere of a striking chamber, which will be described below, and a cooling unit 70 for cooling the breaker unit 20 in addition to striking portions of the chisel 30 and a piston 22 in a striking chamber 23 by supplying external air into the striking chamber 23 and the vacuum chamber 51 using a vacuum pressure generated by the vacuum generation unit 60. A chisel support 80, which slidably supports the chisel 30 and prevents noise from being transmitted to the breaker housing 50 and the breaker unit 20 is provided on the breaker housing 50.

A configuration of the vacuum breaker according to the present invention configured as described above will be described in more detail below.

The breaker unit 20 is installed in the vacuum chamber 51 with the plurality of vibration reduction members 100 installed in the breaker housing 50. The breaker unit 20 includes the cylinder part 21 including the piston 22 reciprocally moved by a hydraulic pressure supply unit and a front head 25 which is coupled to the cylinder part 21, in which the chisel 30 is slidably installed, and which includes the striking chamber 23 for striking the chisel 30 using the piston 22.

A support 26 may be further provided on an inner circumferential surface of the striking chamber 23 to prevent the chisel 30 from moving upward.

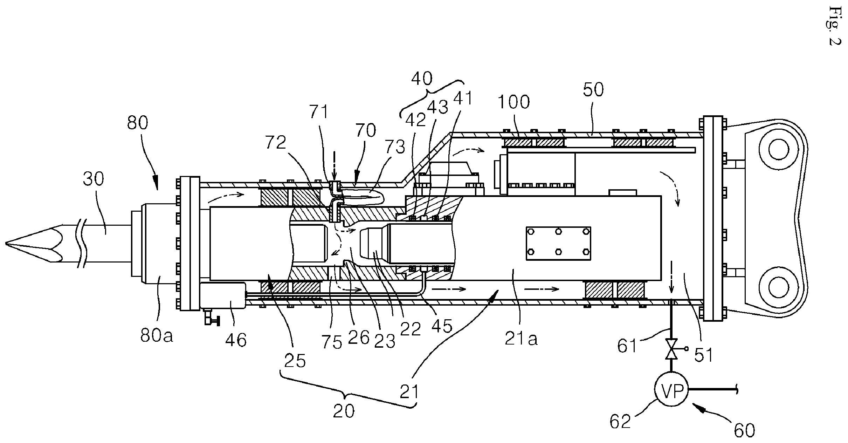

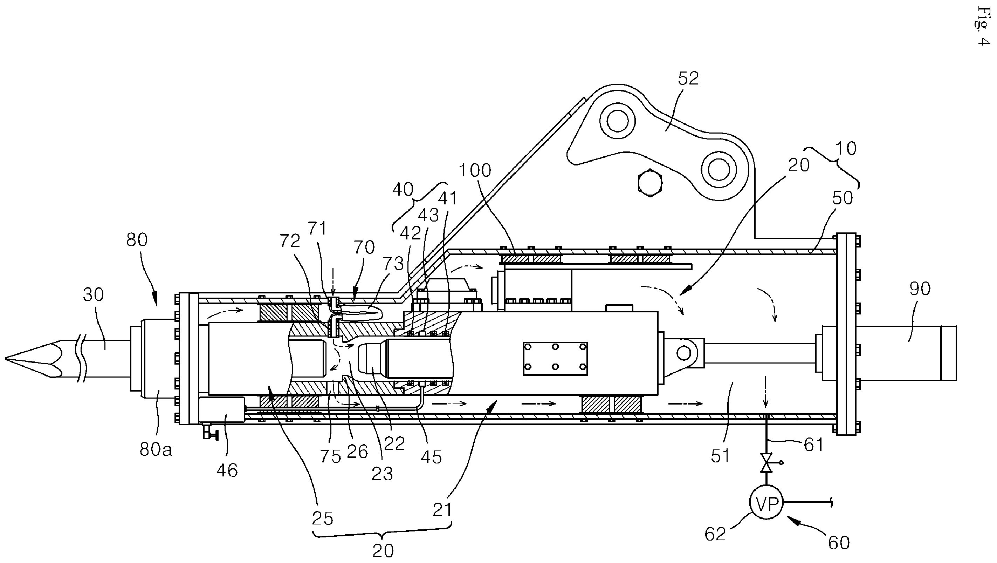

Meanwhile, as illustrated in FIGS. 2 and 4, an oil leak prevention part 40 which prevents an operation oil from leaking into striking chamber 23 due to a vacuum pressure applied to the striking chamber 23 is further provided in the cylinder part 21. In the oil leak prevention part 40, piston seals 41 for close contact between a cylinder 21a and an outer surface of the piston are installed, and vacuum seals 42 which are installed to be spaced a predetermined distance from the piston seals 41 to prevent a vacuum pressure applied to the striking chamber 23 from being applied to an installation portion of the piston in the cylinder 21a are installed.

In addition, an oil groove 43 for storing a lubricant is formed in an inner surface of the cylinder 21a between the vacuum seal 42 and the piston seal 41. An oil discharge pipe 45 for discharging oil in the oil groove 43 to the outside of the breaker housing 50 is connected to the cylinder 21a, and the oil discharge pipe 45 extends to the outside of the breaker housing 50 or is connected to a storage tank 46 installed in the breaker housing.

In addition, as described above, the breaker housing 50 surrounds the breaker unit 20 to form the vacuum chamber 51 between an outer circumferential surface of the breaker unit 20 and an inner circumferential surface of the breaker housing 50. However, the present invention is not limited thereto, and the breaker housing 50 may also be installed to surround a part of the breaker unit 20, that is, a part of the front head 25, to form the vacuum chamber 51 around the striking chamber 25 of the breaker unit 20.

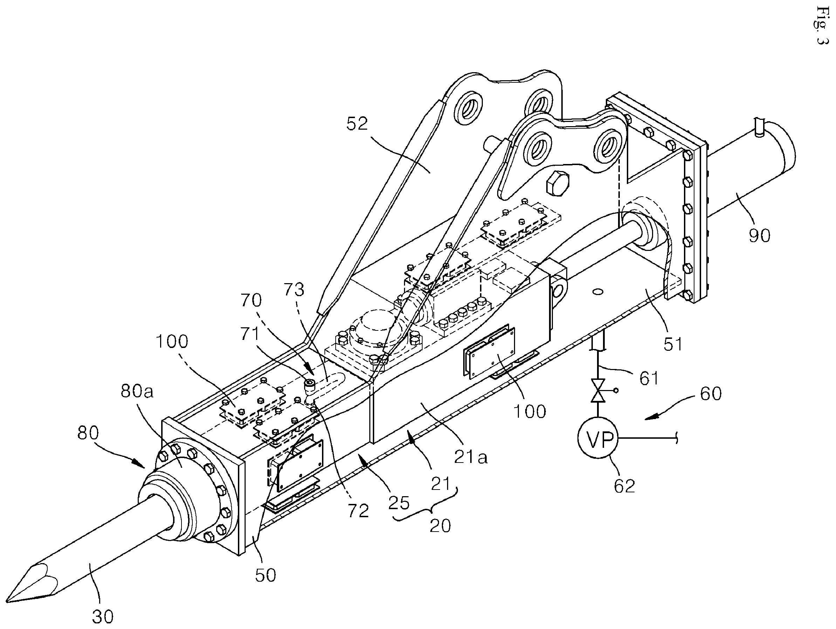

The vibration reduction members 100 support the breaker unit 20 so that the breaker unit 20 is fixed or moved forward or rearward in the vacuum chamber 51 of the breaker housing 50. As illustrated in FIGS. 3 and 4, in order for the vibration reduction members 100 to movably support the breaker unit 20 forward or rearward in the breaker housing 50, the vibration reduction members 100 are fixed to the inner surface of the breaker housing 50, and end portions of the vibration reduction members 100 are in contact with and slide on the outer surface of the breaker unit 20. The vibration reduction member 100 may be formed of one material selected from a non-ferrous metal, rubber, or a synthetic resin, but is not limited thereto.

The vacuum generation unit 60 includes a discharge pipe 61 installed on the breaker housing 50 to be connected to the vacuum chamber 51 and a vacuum pump 62 connected to the discharge pipe 61. The vacuum generation unit 60 may also be installed to directly vacuum the striking chamber 23 of the breaker unit 20.

Meanwhile, the cooling unit 70 cools the piston 22 in the striking chamber 22, a struck portion of the chisel 30 struck by the piston 22, and the breaker unit 20 by introducing external air into the striking chamber 22 and the vacuum chamber 51 using a vacuum pressure applied to the vacuum chamber 51.

A supply hole 71 for supplying external air, that is, cooling air, to the breaker housing 50 is formed in the cooling unit 70, and an inlet hole 72 which communicates with the striking chamber 23 and through which the cooling air is introduced is formed in the front head 25 constituting the breaker unit 20. The supply hole 71 and the inlet hole 72 are connected by a connection pipe 73.

In addition, a discharge hole 75 is formed in the front head 25 constituting the breaker unit 20 to discharge the cooling air which cools the piston 22 and the chisel in the striking chamber 23 to the vacuum chamber 51 using the vacuum pressure applied to the vacuum chamber 51.

Meanwhile, the chisel support 80, which is installed in the breaker housing 50, slidably supports the chisel 30, reduces vibrations and noise, and reduces the noise from being transmitted to the breaker housing 50 and the breaker unit 20, includes an inner support member 81 which is installed in a chisel housing 80a fixed to the breaker housing 50 and supports an outer circumferential surface of the chisel 30, an outer support member 82 having an inner surface surrounding the inner support member 81 to be spaced a predetermined distance from an outer circumferential surface of the inner support member 81, and a damping member 83 which is installed between the outer circumferential surface of the inner support member 81 and an inner circumferential surface of the outer support member 82 to block noise and reduce vibrations. The damping member 83 may be formed of at least one material selected from rubber, synthetic rubber, a synthetic resin, and a non-ferrous metal.

In addition, a plurality of sealing members 85 spaced a predetermined distance from each other are installed on an inner circumferential surface of the inner support member 81, and at least one lubricant storage groove 86 is formed between the sealing members 85. The lubricant storage groove 86 is formed along the inner circumferential surface to store a lubricant scraped from the outer circumferential surface of the chisel 85 by the sealing member 85.

Meanwhile, as illustrated in FIGS. 3 and 4, the vacuum breaker 10 according to the present invention further includes a reciprocally moving cylinder 90 which moves the breaker unit 20 supported by the vibration reduction members 100 in the vacuum chamber in a forward or rearward direction. The reciprocally moving cylinder 90 is installed on the breaker housing 50 and may be formed as a hydraulic cylinder. When the breaker unit 21 is moved forward or rearward by the reciprocally moving cylinder 90, the chisel 30 enters or exits the vacuum chamber 51 of the breaker housing 50.

In addition, although not illustrated in the drawings, the cylinder part for striking the chisel 30 may be controlled using a pressure reducing valve when a breaker operates. In addition, a vacuum pressure of the vacuum chamber 51 may be maintained to maintain a vacuum of an inside of the striking chamber 23 and increase a descending speed of the piston 22.

An operation of the vacuum breaker according to the present invention configured as described above will be described below.

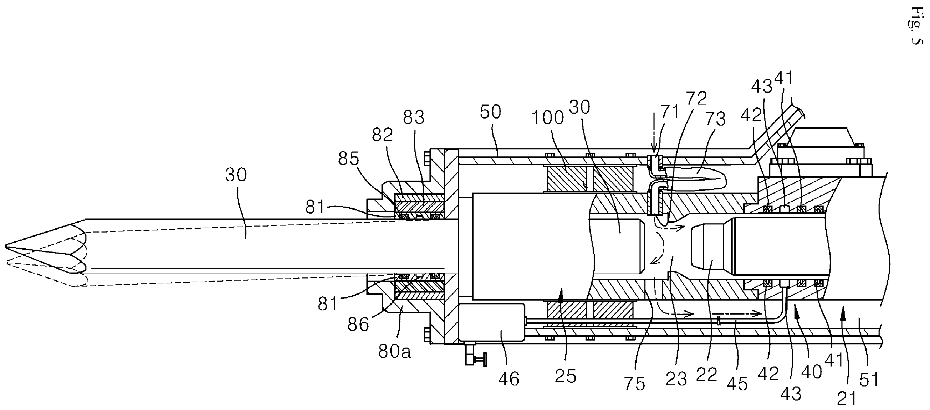

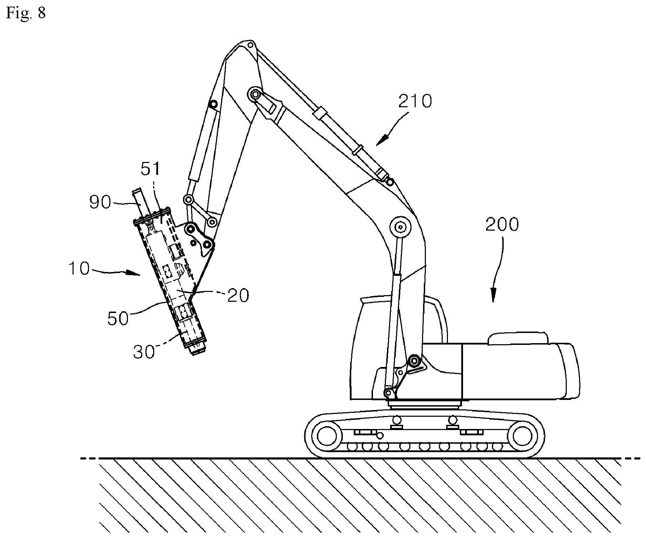

As illustrated in FIGS. 5 and 8, the vacuum breaker 10 according to the present invention operates the breaker unit 20 of which an end portion of the chisel 30 is aligned with a breaking target portion of rock in a state in which the vacuum breaker 10 is installed on a boom 210 of an excavator 200.

In such a process, as illustrated in FIGS. 1 to 4, a striking sound generated by the breaker unit 20 is blocked by the vacuum chamber 51, which is divided by the breaker housing 50 and in which a vacuum pressure is maintained, and reduced or ceased. In addition, noise generated when the breaker unit 20 vibrates can be reduced by the vibration reduction members 100 installed between the breaker unit 20 and the inner circumferential surface of the breaker housing 50 and prevented from being transmitted to the breaker housing 50, and since such vibrations occur in the vacuum chamber, the generation of noise due to the vibrations can be minimized.

Particularly, since the chisel support 80 which supports the chisel 30 is installed in the breaker housing 50, vibrations of the chisel 30 are prevented from being transmitted to the breaker housing 50 and amplifying noise. In more detail, a repulsive force and vibrations in forward, rearward, and radial directions, which are generated when the chisel 30 is striking, can be absorbed by a damping member 83 between the outer support member 82 and the inner support member 81 and prevented from being transmitted to the breaker housing 30.

In addition, in such a process, since a lubricant in the chisel support 80 is stored in the lubricant storage groove 86, the lubricant can be prevented from leaking to an end portion along the outer circumferential surface of the chisel. In addition, since a vacuum state of the vacuum chamber 51 is maintained by the vacuum generation unit 60, cooling air is supplied to the striking chamber 23 through the supply hole 71, the connection pipe 73, and the inlet hole 72, and the supplied cooling air is discharged to the vacuum chamber 51 through the discharge hole 75 after cooling the piston 22 of the striking chamber 23 and the striking portions of the cylinder part 21 and the chisel 30. The cooling air discharged to the vacuum chamber 51 is discharged to the outside through the discharge pipe 61 and the vacuum pump 62 after cooling the breaker unit 20.

In this case, since a set vacuum pressure is continuously maintained in the vacuum chamber 51 by the vacuum generation unit 60, the vacuum pressure is not decreased by the cooling air supplied through the supply hole 71.

In addition, since the oil leak prevention part 40 which prevents an operation oil from leaking into the striking chamber 23 due to a vacuum pressure applied to the striking chamber 23 is provided in the cylinder part 21, the operation oil of the breaker unit 20 can be prevented from being introduced into the striking chamber 23.

That is, in a process in which the breaker unit 20 operates, as the vacuum pressure is applied to the striking chamber 23, the operation oil may leak along an outer surface of the piston 22 and the inner surface of the cylinder 23a, and the operation oil is collected in the storage tank 46 through the oil groove 43 and the oil discharge pipe 45 or discharged to the outside. Accordingly, a problem generated due to the operation oil being leaked into the striking chamber 45 can be prevented. Particularly, wear states of the piston seal 41 and the vacuum seal 42 can be checked through a discharge amount of the operation oil discharged through the oil discharge pipe 45.

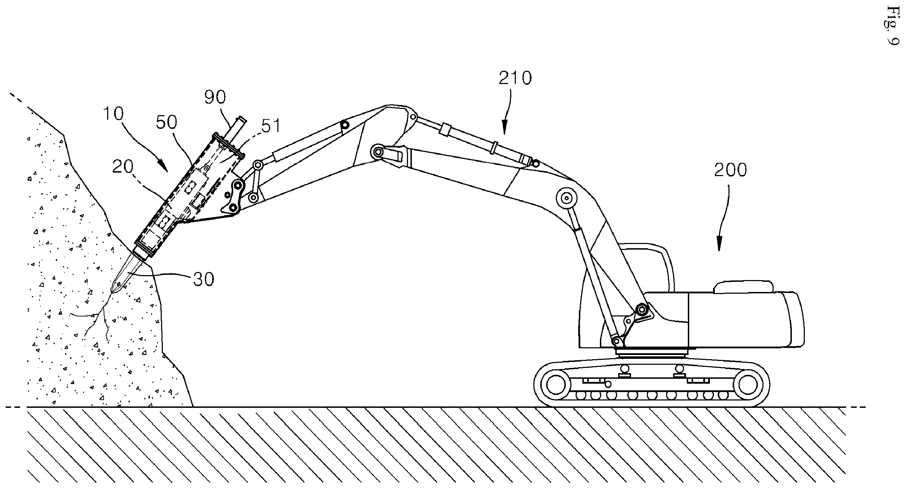

Meanwhile, when the reciprocally moving cylinder 90 is installed in the breaker housing 50, and the chisel 30 enters the vacuum chamber 51 in which a vacuum pressure is maintained, as illustrated in FIG. 9, in a state in which the breaker housing 50 comes closer to rock, the reciprocally moving cylinder 90 operates, a part of the chisel 30 is positioned in the vacuum chamber 51 in which the vacuum pressure is maintained, and thus an effect of blocking noise due to striking and vibrations of the chisel 30 and noise generated by a reaction force due to breaking of the rock can be maximized.

As described above, in the vacuum breaker according to the present invention, since a vacuum pressure is applied to the striking chamber for striking the chisel using the piston, striking power can be maximized by increasing a descending speed of the piston, a striking sound due to the piston and vibrations generated due to vibrations of the chisel and the breaker unit can be reduced, and thus occurrence of civil complaints due to the noise can be prevented when work is performed even in a manner like the a conventional manner.

While the present invention has been described with reference to the embodiment illustrated in the accompanying drawings, it is merely exemplary. It will be understood by those skilled in the art that various modifications and other equivalent example embodiments may be made from the embodiment of the present invention. Therefore, the scope of the present invention should be defined by the appended claims.

## Claims

1. A vacuum breaker comprising:
a breaker unit (20) including a cylinder part having a piston which is reciprocally moved and a front head which slidably supports a chisel (30) for breaking and includes a striking chamber for striking the chisel using the piston of the cylinder part;
a breaker housing (50) which surrounds the breaker unit to form a vacuum chamber for blocking noise;
a vacuum generation unit (60) which is installed on the breaker housing and maintains a vacuum state of the vacuum chamber; and chracterised by
a cooling unit (70) which supplies external air to the striking chamber of the breaker unit surrounded by the breaker housing to cool a striking portion of the piston and a striking portion of the chisel and discharges the external air which has cooled the striking portions through the vacuum chamber so as to cool the breaker unit.

2. The vacuum breaker of claim 1, wherein:
a supply hole through which the external air is introduced into the breaker housing is formed in the cooling unit;
an inlet hole is formed in the front head communicating with the striking chamber;
a connection pipe connecting the supply hole and the inlet hole is provided; and
a discharge hole is formed in the front head so that the striking chamber communicates with the vacuum chamber, air for cooling is introduced into the striking chamber through the supply hole and the inlet hole, and a descending speed of the piston is increased by a vacuum pressure applied to the striking chamber.

3. The vacuum breaker of claim 1, wherein the breaker housing further includes a chisel support which surrounds and supports a part of the chisel,
wherein the chisel support includes:
an inner support member which is installed in the breaker housing and supports the part of the chisel;
an outer support member having an inner surface surrounding the inner support member to be spaced a predetermined distance from an outer surface of the inner support member; and
a damping member which is installed between the outer surface of the inner support member and the inner surface of the outer support member, blocks noise, reduces vibrations, and prevents generation of a gap due to shaking of the chisel.

4. The vacuum breaker of claim 3, wherein:
a plurality of sealing members are installed on the inner circumferential surface of the inner support member to be spaced a predetermined distance from each other; and
at least one lubricant storage groove which prevents a lubricant from leaking to an outside of the vacuum breaker is formed between the sealing members.

5. The vacuum breaker of claim 1, wherein:
a reciprocally moving cylinder which moves the breaker unit installed in the vacuum chamber in a forward or rearward direction in the vacuum chamber is further provided on the breaker housing; and
when the breaker unit moves forward or rearward by the reciprocally moving cylinder, the chisel enters or exits the vacuum chamber of the breaker housing.

6. The vacuum breaker of claim 1, wherein:
an oil leak prevention part, which prevents an operation oil from leaking into the striking chamber due to a vacuum pressure applied to the striking chamber, is further provided in the cylinder part;
piston seals for close contact between a cylinder and an outer surface of the piston and vacuum seals which are installed to be spaced a predetermined distance from the piston seals and maintain a vacuum state are installed in the oil leak prevention part;
an oil groove in which a lubricant is stored is formed in an inner surface of the cylinder between the vacuum seals and the piston seals; and
an oil discharge pipe through which oil in the oil groove is discharged to an outside of the breaker housing or to a storage tank is installed in the cylinder.

## Patentansprüche

1. Vakuumschalter umfassend:
eine Schaltereinheit (20) mit einem Zylinderteil, der einen hin- und hergehenden Kolben und einen vorderen Kopf aufweist, der einen Meißel (30) zum Brechen verschiebbar lagert und eine Schlagkammer zum Schlagen des Meißels mit dem Kolben des Zylinderteils aufweist;
ein Schaltergehäuse (50), das die Schaltereinheit umgibt, um eine Vakuumkammer zum Blockieren von Geräuschen zu bilden;
eine Vakuumerzeugungseinheit (60), die an dem Schaltergehäuse angebracht ist und einen Vakuumzustand der Vakuumkammer aufrechterhält; und **gekennzeichnet durch**
eine Kühleinheit (70), die der vom Schaltergehäuse umgebenen Schlagkammer der Schaltereinheit Außenluft zuführt, um einen Schlagabschnitt des Kolbens und einen Schlagabschnitt des Meißels zu kühlen, und die die die Schlagabschnitte gekühlte Außenluft durch die Vakuumkammer abführt, um die Schaltereinheit zu kühlen.

2. Vakuumschalter nach Anspruch 1, wobei
in der Kühleinheit eine Zufuhröffnung ausgebildet ist, durch die die Außenluft in das Schaltergehäuse eingeführt wird;
in dem vorderen Kopf, der mit der Schlagkammer in Verbindung steht, eine Einlassöffnung ausgebildet ist;
ein Verbindungsrohr vorgesehen ist, das die Zufuhröffnung und die Einlassöffnung verbindet; und
in dem vorderen Kopf eine Auslassöffnung ausgebildet ist, so dass die Schlagkammer mit der Vakuumkammer in Verbindung steht, Luft zum Kühlen durch die Zufuhröffnung und die Einlassöffnung in die Schlagkammer eingeführt wird und eine Abwärtsgeschwindigkeit des Kolbens durch einen auf die Schlagkammer ausgeübten Unterdruck erhöht wird.

3. Vakuumschalter nach Anspruch 1, wobei das Schaltergehäuse ferner einen Meißelhalter umfasst, der einen Teil des Meißels umgibt und stützt,
wobei die Meißelhalterung umfasst:
ein inneres Halteelement, das in dem Schaltergehäuse angebracht ist und den Teil des Meißels hält;
ein äußeres Halteelement mit einer Innenfläche, die das innere Halteelement umgibt, so dass es in einem vorbestimmten Abstand von einer Außenfläche des inneren Halteelements beabstandet ist; und
ein Dämpfungselement, das zwischen der Außenfläche des inneren Halteelements und der Innenfläche des äußeren Halteelements angebracht ist, Geräusche dämpft, Vibrationen reduziert und die Entstehung eines Spaltes aufgrund von Erschütterungen des Meißels verhindert.

4. Vakuumschalter nach Anspruch 3, wobei
eine Vielzahl von Dichtungselementen an der inneren Umfangsfläche des inneren Stützelements in einem vorbestimmten Abstand voneinander angeordnet sind; und
mindestens eine Schmiermittelaufnahmerille, die ein Austreten von Schmiermittel aus dem Vakuumschalter nach außen verhindert, zwischen den Dichtungselementen ausgebildet ist.

5. Vakuumschalter nach Anspruch 1, wobei
ein hin- und hergehender Zylinder, der die in der Vakuumkammer angeordnete Schaltereinheit in der Vakuumkammer in Vorwärts- oder Rückwärtsrichtung bewegt, zusätzlich am Schaltergehäuse vorgesehen ist; und
wenn sich die Schaltereinheit durch den hin- und hergehenden Zylinder vorwärts oder rückwärts bewegt, der Meißel in die Vakuumkammer des Schaltergehäuses eintritt oder aus dieser austritt.

6. Vakuumschalter nach Anspruch 1, wobei
ein Ölleckage-Verhinderungsteil, der verhindert, dass Betriebsöl aufgrund eines auf die Schlagkammer ausgeübten Unterdrucks in die Schlagkammer austritt, zusätzlich im Zylinderteil vorgesehen ist;
Kolbendichtungen für einen engen Kontakt zwischen einem Zylinder und einer Außenfläche des Kolbens und Vakuumdichtungen, die in einem vorbestimmten Abstand von den Kolbendichtungen angebracht sind und einen Vakuumzustand aufrechterhalten, in dem Ölleckschutzteil angebracht sind;
eine Ölnut, in der ein Schmiermittel gespeichert ist, in einer Innenfläche des Zylinders zwischen den Vakuumdichtungen und den Kolbendichtungen ausgebildet ist; und
ein Ölablassrohr, durch das Öl aus der Ölnut nach außen aus dem Schaltergehäuse oder in einen Vorratsbehälter abgelassen wird, ist im Zylinder angebracht.

## Revendications

1. Un casse-vide comprenant :
une unité de rupture (20) comprenant une partie cylindre comportant un piston qui est déplacé de manière alternative et une tête avant qui supporte de manière coulissante un burin (30) destiné à la rupture et comprenant une chambre de frappe destinée à frapper le burin à l'aide du piston de la partie cylindre ;
un boîtier de brise-vide (50) qui entoure l'unité de brise-vide pour former une chambre à vide destinée à bloquer le bruit ;
une unité de génération de vide (60) qui est installée sur le boîtier de brise-vide et maintient un état de vide dans la chambre à vide ; et **caractérisé par**
une unité de refroidissement (70) qui fournit de l'air extérieur à la chambre de frappe de l'unité de brise-glace entourée par le boîtier de brise-glace afin de refroidir une partie de frappe du piston et une partie de frappe du burin, et qui évacue l'air extérieur qui a refroidi les parties de frappe à travers la chambre à vide afin de refroidir l'unité de brise-glace.

2. Un casse-vide selon la revendication 1, dans lequel :
un trou d'alimentation à travers lequel l'air extérieur est introduit dans le boîtier du brise-glace est formé dans l'unité de refroidissement ;
un trou d'entrée est formé dans la tête avant communiquant avec la chambre de frappe ;
un tuyau de raccordement reliant le trou d'alimentation et le trou d'entrée est prévu ; et
un trou d'évacuation est formé dans la tête avant de manière à ce que la chambre de frappe communique avec la chambre à vide, l'air de refroidissement est introduit dans la chambre de frappe à travers le trou d'alimentation et le trou d'entrée, et la vitesse de descente du piston est augmentée par une pression de vide appliquée à la chambre de frappe.

3. Un casse-vide selon la revendication 1, dans lequel le boîtier du brise-vide comprend en outre un support de burin qui entoure et supporte une partie du burin,
dans lequel le support de burin comprend :
un élément de support interne qui est installé dans le boîtier du brise-vide et supporte la partie du burin ;
un élément de support extérieur ayant une surface intérieure entourant l'élément de support intérieur de manière à être espacé d'une distance prédéterminée d'une surface extérieure de l'élément de support intérieur ; et
un élément d'amortissement qui est installé entre la surface extérieure de l'élément de support intérieur et la surface intérieure de l'élément de support extérieur, bloque le bruit, réduit les vibrations et empêche la formation d'un espace dû à la vibration du burin.

4. Un casse-vide selon la revendication 3, dans lequel :
une pluralité d'éléments d'étanchéité sont installés sur la surface circonférentielle intérieure de l'élément de support intérieur à une distance prédéterminée les uns des autres ; et
au moins une rainure de stockage de lubrifiant qui empêche un lubrifiant de fuir vers l'extérieur du brise-vide est formée entre les éléments d'étanchéité.

5. Un casse-vide selon la revendication 1, dans lequel :
un cylindre à mouvement alternatif qui déplace l'unité de rupture installée dans la chambre à vide vers l'avant ou vers l'arrière dans la chambre à vide est en outre prévu sur le boîtier de rupture ; et
lorsque l'unité de rupture se déplace vers l'avant ou vers l'arrière sous l'action du cylindre à mouvement alternatif, le burin pénètre dans la chambre à vide du boîtier de rupture ou en sort.

6. Un casse-vide selon la revendication 1, dans lequel :
une pièce de prévention des fuites d'huile, qui empêche l'huile de fonctionnement de fuir dans la chambre de frappe en raison d'une pression de vide appliquée à la chambre de frappe, est en outre prévue dans la partie cylindre ;
des joints de piston assurant un contact étroit entre un cylindre et une surface extérieure du piston et des joints à vide qui sont installés à une distance prédéterminée des joints de piston et maintiennent un état de vide sont installés dans la partie de prévention des fuites d'huile ;
une rainure à huile dans laquelle un lubrifiant est stocké est formée dans une surface intérieure du cylindre entre les joints d'étanchéité au vide et les joints d'étanchéité du piston ; et
un tuyau d'évacuation d'huile à travers lequel l'huile contenue dans la rainure d'huile est évacuée vers l'extérieur du boîtier du disjoncteur ou vers un réservoir de stockage est installé dans le cylindre.
